# EUROPEAN PATENT APPLICATION

(11) **EP 4 707 726 A1**
(43) Date of publication of application: **11.03.2026**
(21) Application number: 24216135.4
(22) Date of filing: 28.11.2024
(51) Int. Cl.: G01B 11/275, G01B 21/04

(54) **FOUR-WHEEL ALIGNMENT METHOD AND FOUR-WHEEL ALIGNMENT SYSTEM**

(30) Priority: 09.09.2024 CN 202411259897
(71) Applicant: Shenzhen Smartsafe Tech Co., Ltd., Shenzhen, Guangdong 518000 (CN)
(72) Inventor: ZHAN, Wei, Shenzhen, 518000 (CN); LIU, Jun, Shenzhen, 518000 (CN); LIN, Xi, Shenzhen, 518000 (CN)
(74) Representative: MERH-IP Matias Erny Reichl Hoffmann Patentanwälte PartG mbB

(57) **Abstract**

The present application relates to the field of vehicle detection technology, and provides a four-wheel alignment method and a four-wheel alignment system (1). The four-wheel alignment system (1) includes at least two calibration units (20), at least one measuring unit (30), and a computing unit, and the method includes: fixing the at least two calibration units (20) to wheels of the vehicle to be measured, and fixing the at least one measuring unit (30) to a same side of the vehicle to be measured where the at least two calibration units (20) are fixed; respectively collecting, through the at least one measuring unit (30), images of at the least two calibration units (20) to obtain a first image; and receiving the first image through the calculation unit (10), and calculating to obtain four-wheel alignment parameters of the vehicle to be measured based on the first image. The four-wheel alignment method provided in the present application can accurately determine the positional relationship between the measuring unit (30) and the calibration unit (20) through the at least two calibration units (20), the at least one measuring unit (30) and the calculating unit included in the four-wheel alignment system (1), therefore accurate four-wheel alignment parameters of the vehicle to be measured can be obtained, and the measurement accuracy of the four-wheel alignment parameters is improved.

## Description

### TECHNICAL FIELD

The present application relates to the field of vehicle detection technology, more particularly to a four-wheel alignment method and a four-wheel alignment system.

### BACKGROUND

At present, in order to obtain the four-wheel alignment parameters of a vehicle, users usually need to use a special four-wheel alignment device to measure the parameters of each wheel of the vehicle. However, the existing four-wheel alignment device includes a plurality of measuring devices, each measuring device uses a different coordinate system, and the positional relationship between different measuring devices cannot be determined, which results in the inability of the existing four-wheel alignment device to accurately measure the four-wheel alignment parameters of the vehicle.

### SUMMARY

The embodiment of the present application provides a four-wheel alignment method and a four-wheel alignment system. The positional relationship between the measuring unit and the calibration unit can be accurately determined through the at least two calibration units, at least one measuring unit and a calculation unit included in the four-wheel alignment system, therefore accurate four-wheel alignment parameters of the vehicle to be measured can be obtained, and the measurement accuracy of the four-wheel alignment parameters is improved.

In s first aspect, the embodiment of the present application provides a four-wheel alignment method, which is applied to a four-wheel alignment system. The four-wheel alignment system includes at least two calibration units, at least one measuring unit, and a calculation unit, and the method includes:
fixing the at least two calibration units to wheels of the vehicle to be measured, and fixing the at least one measuring unit to a same side of the vehicle to be measured where the at least two calibration units are fixed;
respectively collecting, through the at least one measuring unit, images of at the least two calibration units to obtain a first image; and
receiving the first image through the calculation unit, and calculating to obtain four-wheel alignment parameters of the vehicle to be measured based on the first image.

Optionally, four calibration units are provided, two measuring units are provided, and the two measuring units comprise two first cameras, a calibration member, and a second camera, and the step of fixing the at least two calibration units to the wheels of the vehicle to be measured and the fixing of the at least one measuring unit to the same side of the vehicle to be measured where at least two calibration units are fixed includes:
respectively fixing the four calibration units to four wheels of the vehicle to be measured; and
respectively fixing the two measuring units to middle positions of front wheels and rear wheels on both sides of the vehicle to be measured;
the step of respectively collecting, through the at least one measuring unit, the images of at the least two calibration units to obtain the first image includes:
   respectively collecting, through two first cameras of the measuring unit on each side of the vehicle to be measured, images of the calibration units respectively fixed on the front wheels and rear wheels of the vehicle to be measured on a same side, to obtain two first images;
   the four-wheel alignment method further includes:
      respectively collecting, through second cameras of two measuring units, a second image of the calibration units located on other side of the vehicle to be measured;
      the step of receiving the first image through the calculation unit, and calculating to obtain the four-wheel alignment parameters of the vehicle to be measured based on the first image includes:
         receiving, through the calculation unit, the first image and the second image captured by the two measuring units, and calculating the four-wheel alignment parameters of the vehicle to be measured based on the received first image and the second image.

Optionally, the step of receiving, through the calculation unit, the first image and the second image captured by the two measuring units, and calculating the four-wheel alignment parameters of the vehicle to be measured based on the received first image and the second image includes:
receiving, through the calculation unit, the first image and the second image collected by the two measuring units;
calculating, through the calculation unit, a first positional relationship between the two measuring units based on the received second image; and
calculating, through the calculation unit, the four-wheel alignment parameters of the vehicle to be measured based on the received first image and the first positional relationship between the two measuring units.

Optionally, the step of calculating, through the calculation unit, the first positional relationship between the two measuring units based on the received second image includes:
respectively obtaining a second positional relationship between the calibration members and the second cameras in the two measuring units, actual coordinate information of each calibration member, and internal parameters of each second camera; and
calculating the first positional relationship based on a pre-stored second positional relationship, each of the actual coordinate information, each of the internal parameters, and each second image.

Optionally, before the step of respectively collecting the images of the calibration units respectively fixed on the front wheels and rear wheels of the vehicle to be measured on the same side, to obtain the two first images, the our-wheel alignment method further includes:
respectively fixing a marker to a capturing range of each of the first camera and the second camera;
respectively obtaining third images of respective corresponding markers obtained by each of the first camera and the second camera and the markers at different positions, and obtaining the three-dimensional coordinates of each of the calibration members; and
determining a third positional relationship between each of the first camera and the second camera based on each of the third images and the three-dimensional coordinates of each of the calibration members.

Optionally, the step of respectively obtaining the second positional relationship between the calibration members and the second cameras in the two measuring units includes:
respectively obtaining posture images containing the calibration members at different positions of the respective relative measuring units captured by the second cameras in the two measuring units, and obtaining the three-dimensional coordinates of each calibration member at the different positions; and
determining the second positional relationship between the calibration members and the second cameras in the two measuring units based on each of the posture images and the three-dimensional coordinates corresponding to each of the posture images.

Optionally, both of the two measuring units respectively comprise a control module, the two measuring units are respectively connected to a terminal device for communication, the calculation unit is the control module in the first measuring unit, and the first measuring unit is any one of the two measuring units; and the four-wheel alignment method further includes:
respectively obtaining, through the control modules of the two measuring units, the first image captured by the respective first camera and the second image captured by the respective second camera;
receiving, through the terminal device, the first image and the second image from the control modules of other measuring units except the first measuring unit;
sending, through the terminal device, the received first image and the second image to the control module of the first measuring unit;
calculating, through the control module of the first measuring unit, to obtain the four-wheel alignment parameters of the vehicle to be measured based on the first image captured by the first camera of the first measuring unit, the second image captured by the second camera, and the first image and the second image received by the other measuring units;
the four-wheel alignment method further includes:
   sending, through the control module of the first measuring unit, the four-wheel alignment parameters to the terminal device; and
   displaying, through the terminal device, the four-wheel alignment parameters.

Optionally, both of the two measuring units respectively comprise a control module, the two measuring units are respectively connected to a terminal device for communication, the calculation unit is the control module in a target measuring unit, and the target measuring unit is any one of the two measuring units; the four-wheel alignment method further includes:
respectively obtaining, through the control modules of the two measuring units, the first image captured by the respective first camera and the second image captured by the respective second camera;
receiving, through the control module of the target measuring unit, the first image and the second image from the control module of another measuring unit other than the target measuring unit; and
calculating, through the control module of the target measuring unit, the four-wheel alignment parameters of the vehicle to be measured based on the first image captured by the first camera of the target measuring unit, the second image captured by the second camera, and the first image and the second image captured by the other measuring unit.

Optionally, both of the two measuring units respectively comprise a control module, the control modules of the two measuring units are respectively connected to the terminal device for communication, and the calculation unit is the terminal device; the four-wheel alignment method further includes:
respectively obtaining, through the control modules of the two measuring units, the first image captured by the respective first camera and the second image captured by the respective second camera;
respectively receiving, through the terminal device, the first image and the second image from the control modules of the two measuring units;
calculating, through the terminal device, to obtain the four-wheel alignment parameters of the vehicle to be measured based on the received first image and the second image;
the four-wheel alignment method further includes:
   displaying, through the terminal device, the four-wheel alignment parameters.

In a second aspect, an embodiment of the present application provides a four-wheel alignment system, which includes:
at least two calibration units, configured to be fixed on wheels of the vehicle to be measured;
at least one measuring unit, including two first cameras, the two first cameras are respectively configured to collect first images of respective corresponding calibration units; and
the calculation unit, configured to receive the first image and calculate four-wheel alignment parameters of the vehicle to be measured based on the first image.

In a third aspect, an embodiment of the present application provides a computer-readable storage medium. The computer-readable storage medium stores a computer program, and when the computer program is executed by a processor, the four-wheel alignment method described in any one of the first aspects is implemented.

In a fourth aspect, an embodiment of the present application provides a computer program product, and when the computer program product is run on a four-wheel alignment system, the processing module can execute the four-wheel alignment method described in any one of the first aspects.

Compared with the prior art, the embodiments of the present application have the following beneficial effects:
the four-wheel alignment method provided in the embodiments of the present application is applied to a four-wheel alignment system. The four-wheel alignment system includes: fixing the at least two calibration units to wheels of the vehicle to be measured, and fixing the at least one measuring unit to a same side of the vehicle to be measured where the at least two calibration units are fixed; respectively collecting, through the at least one measuring unit, images of at the least two calibration units to obtain a first image; and receiving the first image through the calculation unit, and calculating to obtain four-wheel alignment parameters of the vehicle to be measured based on the first image.. The four-wheel alignment method provided in the present application can accurately determine the positional relationship between the measuring unit and the calibration unit through the at least two calibration units, the at least one measuring unit and the calculating unit included in the four-wheel alignment system, therefore accurate four-wheel alignment parameters of the vehicle to be measured can be obtained, and the measurement accuracy of the four-wheel alignment parameters is improved.

### BRIEF DESCRIPTION OF THE DRAWINGS

In order to more clearly illustrate the technical solutions in the embodiments of the present application, the drawings required for use in the embodiments or prior art descriptions will be briefly introduced below. Obviously, the drawings described below are only some embodiments of the present application. For those skilled in the art, other drawings can be obtained based on these drawings without creative work.
FIG. 1 is a structural schematic diagram of a four-wheel alignment system provided in an embodiment of the present application;
FIG. 2 is a partial physical structural diagram of a four-wheel alignment system provided in an embodiment of the present application;
FIG. 3 is a physical structural diagram of a measuring unit provided in an embodiment of the present application;
FIG. 4 is a structural schematic diagram of a four-wheel alignment system provided in another embodiment of the present application;
FIG. 5 is an implementation flow chart of a four-wheel alignment method provided in an embodiment of the present application;
FIG. 6 is an implementation flow chart of a four-wheel alignment method provided in another embodiment of the present application; and
FIG. 7 is an implementation flow chart of a four-wheel alignment method provided in another embodiment of the present application.

### DETAILED DESCRIPTION OF EMBODIMENTS

In the following description, for the purpose of explanation rather than limitation, specific details such as specific system structures and technologies are proposed to thoroughly understand the embodiments of the present application. However, it should be clear to those skilled in the art that the present application can also be implemented in other embodiments without these specific details. In other cases, detailed descriptions of well-known systems, devices, circuits, and methods are omitted so as not to obscure the description of the present application with unnecessary details.

It should be understood that when used in the present specification and the appended claims, the term "including" indicates the presence of the described features, wholes, steps, operations, elements, and/or components, but does not exclude the presence or addition of one or more other features, wholes, steps, operations, elements, components, and/or collections thereof.

It should also be understood that the term "and/or" used in the present specification and the appended claims refers to any combination of one or more of the associated listed items and all possible combinations, and includes these combinations.

As used in the present specification and the appended claims, the term "if" can be interpreted as "when..." or "once" or "in response to determining" or "in response to detecting" depending on the context. Similarly, the phrase "if it is determined" or "if [the described condition or event] is detected" can be interpreted as meaning "once it is determined" or "in response to determining" or "once [the described condition or event] is detected" or "in response to detecting [the described condition or event]" depending on the context.

In addition, in the description of the present application specification and the attached claims, the terms "first", "second", "third", etc. are only used to distinguish the description and cannot be understood as indicating or implying relative importance.

The reference to "one embodiment" or "some embodiments" described in the present application specification means that one or more embodiments of the present application include specific features, structures or characteristics described in combination with the embodiment. Therefore, the sentences "in one embodiment", "in some embodiments", "in other embodiments", "in some other embodiments", etc. that appear in different places in this specification do not necessarily refer to the same embodiment, but mean "one or more but not all embodiments", unless otherwise specifically emphasized in other ways. The terms "including", "containing", "having" and their variations all mean "including but not limited to", unless otherwise specifically emphasized in other ways.

In practical applications, in order to obtain the four-wheel alignment parameters of a vehicle, users usually need to use a special processing module (such as a four-wheel alignment device) to measure the parameters of each wheel of the vehicle. However, the existing processing module contains a plurality of measuring devices, each measuring device uses a different coordinate system, and the positional relationship between different measuring devices cannot be determined, which results in the inability of the existing processing module to accurately measure the various four-wheel parameters of the vehicle.

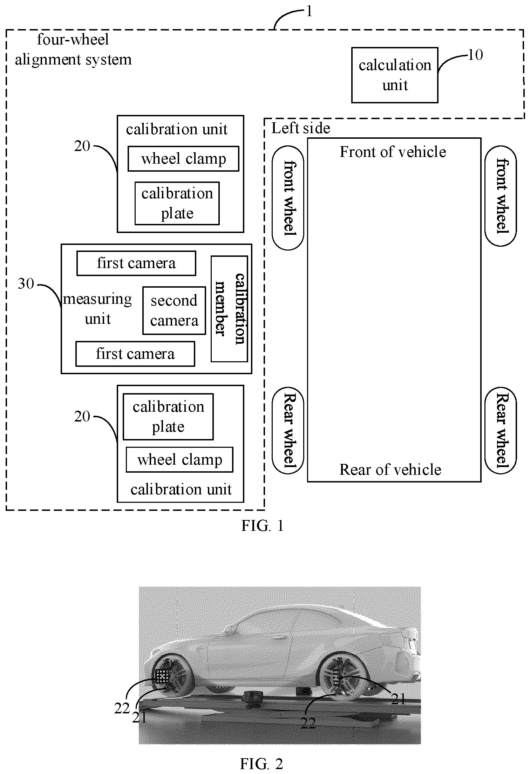

Based on this, an embodiment of the present application provides a four-wheel alignment method, which can accurately determine the positional relationship between the measuring unit and the calibration unit through the at least two calibration units, the at least one measuring unit and the calculation unit included in the four-wheel alignment system, therefore accurate four-wheel alignment parameters of the vehicle to be measured can be obtained, and the measurement accuracy of the four-wheel alignment parameters is improved.
as shown in FIG. 1, which is a schematic diagram of the structure of a four-wheel alignment system provided in an embodiment of the present application. As shown in FIG. 1, the four-wheel alignment system 1 includes: a calculation unit 10, at least two calibration units 20, and at least one measuring unit 30. Among them, at least one measuring unit 30 includes two first cameras.

In the embodiment of the present application, the at least two calibration units 20 are used to be fixed on the wheels of the vehicle to be measured.

At least one measuring unit 30 includes two first cameras, and the two first cameras are respectively used to collect the first images of the respective corresponding calibration units 20.

The calculation unit 10 is used to receive the above-mentioned first image and calculate the four-wheel alignment parameters of the vehicle to be measured based on the first image.

It can be understood that one calibration unit 20 of at least two calibration units 20 is used to fix the front wheels of the vehicle to be measured; another calibration unit 20 of the at least two calibration units 20 is used to fix the rear wheels of the vehicle to be measured on the same side as the above-mentioned front wheels; at least one measuring unit 30 is fixed between the above-mentioned front wheel and the rear wheel, and is used to calibrate the position of at least two calibration units 20 on the same side of the vehicle to be measured.

For example, as shown in FIG. 1, the same side is the left side of the vehicle to be measured.

It should be noted that the same side can also be the right side of the vehicle to be measured.

Each calibration unit 20 corresponds to a first image.

Continue to refer to FIG. 1. Each calibration unit 20 includes a wheel clamp and a calibration plate. Among them, the wheel clamp is used to fix the tire of the vehicle, and the calibration plate is used to facilitate the measuring unit 30 located on the same side as the calibration unit 20 for capturing.

Based on this, the first image can be an image containing the calibration plate.

In some possible embodiments, in order to ensure that the tire is fixed, the wheel clamp includes a first sub-clamp and a second sub-clamp. Among them, the first sub-clamp can be used to clamp the upper side of the tire, and the second sub-clamp can be used to clamp the lower side of the tire.

For example, as shown in FIG. 2, FIG. 2 is a physical structure diagram of a four-wheel alignment system provided in an embodiment of the present application. As shown in FIG. 2, the calibration plate 22 is located in the middle of the wheel clamp 21, that is, in the middle of the first sub-clamp and the second sub-clamp.

In practical applications, the four-wheel alignment parameters refer to the caster angle, the kingpin inclination angle, the front wheel camber angle and the front wheel toe angle.

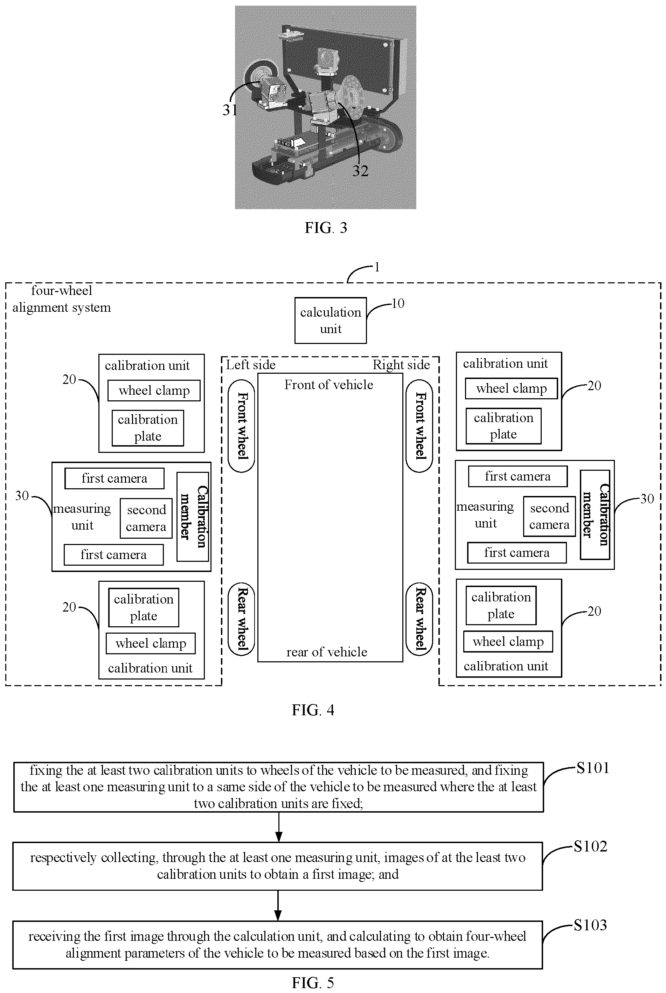

For example, as shown in FIG. 3, which is a physical structure diagram of a measuring unit provided in an embodiment of the present application. As shown in FIG. 3, the first camera 31 and the second camera 32 in the measuring unit 30 are in relative positions.

In the embodiment, the two first cameras are respectively used to capture the corresponding calibration units 20 to obtain the first image.

Based on this, continue to refer to FIG. 3, in order to facilitate the two first cameras to capture various corresponding calibration units 20, the camera positions of the first camera 31 and the second camera 32 are opposite to each other.

In one embodiment of the present application, continue to refer to FIG. 1, at least one measuring unit 30 may also include a second camera. Among them, the second camera is located between the two first cameras, and the second camera is used to capture the measuring unit on the other side of the vehicle to be measured.

Specifically, the positions of the camera heads of the two first cameras are arranged opposite to each other, and the two first cameras are respectively used to capture the images of the calibration plates on the two wheels on one side of the vehicle to be measured, such as the images of the calibration plates on the left front wheel and the left rear wheel.

Based on this, in another embodiment of the present application, as shown in FIG. 4, FIG. 4 is a schematic diagram of the structure of a four-wheel alignment system provided in another embodiment of the present application. As shown in FIG. 4 4, the four-wheel alignment system 1 may also include: at least two calibration units 20 and at least one measuring unit 30 that are located on the other side.

In the embodiment, in combination with FIG. 1, when the same side is the left side of the vehicle to be measured, the other side may be the right side of the vehicle to be measured.

It should be noted that the detailed process of how the four-wheel alignment system 1 specifically calculates the four-wheel alignment parameters of the vehicle to be measured can be referred to the following various method embodiments, which will not be repeated here.

As shown in FIG.5, FIG.5 is an implementation flow chart of a four-wheel alignment method provided in an embodiment of the present application. As shown in FIG.5, the four-wheel alignment method provided in an embodiment of the present application may include steps S101 to S103, which are described in detail as follows:

In a step S101, at least two of the calibration units are fixed to the wheels of the vehicle to be measured, and at least one of the measuring units is fixed to the same side of the vehicle to be measured where at least two of the calibration units are fixed.

In practical applications, when a user needs to obtain the four-wheel alignment parameters of the vehicle to be measured, in order to improve the accuracy of obtaining the four-wheel alignment parameters, the user can send a parameter determination request to the four-wheel alignment system.

In the embodiment of the present application, the parameter determination request detected by the four-wheel alignment system can be: a preset operation for a processing module is detected. Among them, the preset operation can be arranged according to actual needs and is not limited here. For example, the preset operation may be clicking a preset control related to the four-wheel alignment system. Based on this, when the four-wheel alignment system detects that a preset control related to the four-wheel alignment system is clicked, it indicates that a preset operation for the four-wheel alignment system is detected, that is, a parameter determination request is detected.

Before the four-wheel alignment system detects the parameter determination request, the four-wheel alignment system may control a loading device to fix at least two calibration units to the wheels of the vehicle to be measured, and fix at least one measuring unit to the same side of the vehicle to be measured where at least two calibration units are fixed. Among them, the loading device may be a loading robot.

It is understandable that the above-mentioned fixing operation can also be performed by the testing personnel, which is not limited here.

In a step S102, at least one of the measuring units collects images of at least two of the calibration units respectively to obtain a first image.

In the embodiment of the present application, after the at least two calibration units and at least one measuring unit are fixed to the corresponding positions, at least one measuring unit in the four-wheel alignment system can collect images of at least two calibration units respectively to obtain the first images of at least two calibration units respectively.

In some possible embodiments, in combination with FIG. 1, since each calibration unit includes a calibration plate, the first image of each calibration unit can be an image of the calibration plate in the corresponding calibration unit.

In a step S103, the calculation unit receives the first image and calculates the four-wheel alignment parameters of the vehicle to be measured based on the first image.

In the embodiment of the present application, the calculation unit can receive the first images of each calibration unit sent by at least one measuring unit.

Afterwards, for the first image of any calibration unit, the calculation unit can determine the third positional relationship between the any calibration unit and at least one measuring unit based on the first image.

It should be noted that the third positional relationship can be represented by a rotation and translation matrix.

In one embodiment of the present application, for the first image of any calibration unit, since the first image is an image containing a calibration plate, the calculation unit can specifically determine the third positional relationship between any calibration unit and at least one measuring unit based on the first image and the actual coordinate information of the calibration plate. The actual coordinate information of the calibration plate specifically refers to the three-dimensional coordinates of the calibration plate in the preset first coordinate system. The preset first coordinate system is a world coordinate system, which can be a world coordinate system with the set position of the calibration plate as the origin, or a world coordinate system with other point positions on any calibration unit as the origin.

In another embodiment of the present application, since at least one measuring unit includes a first camera for capturing the calibration plate, the calculation unit can obtain the third positional relationship between any calibration unit and at least one measuring unit based on the two-dimensional coordinates of the calibration plate in the image coordinate system corresponding to the first camera and the actual coordinate information (i.e., three-dimensional coordinates) of the calibration plate.

In the embodiment of the present application, after the third positional relationship between any calibration unit and at least one measuring unit is obtained, the calculation unit can determine the four-wheel alignment parameters of the vehicle to be measured based on the third positional relationship.

Specifically, the calculation unit can obtain the parameter information of each tire relative to the calibration unit fixed on each tire. After that, the calculation unit can convert the parameter information based on the third positional relationship corresponding to each calibration unit, so as to obtain the parameter information in the same coordinate system, that is, the final four-wheel alignment parameters.

As can be seen from the above, a four-wheel alignment method provided in an embodiment of the present application, which is applied to a four-wheel alignment system, and the four-wheel alignment system includes at least two calibration units, at least one measuring unit and a calculation unit. The method includes: fixing the at least two calibration units to wheels of the vehicle to be measured, and fixing the at least one measuring unit to a same side of the vehicle to be measured where the at least two calibration units are fixed; respectively collecting, through the at least one measuring unit, images of at the least two calibration units to obtain a first image; and receiving the first image through the calculation unit, and calculating to obtain four-wheel alignment parameters of the vehicle to be measured based on the first image.. The four-wheel alignment method provided in the present application can accurately determine the positional relationship between the measuring unit and the calibration unit through the at least two calibration units, the at least one measuring unit and the calculating unit included in the four-wheel alignment system, therefore accurate four-wheel alignment parameters of the vehicle to be measured can be obtained, and the measurement accuracy of the four-wheel alignment parameters is improved.

In one embodiment of the present application, since the vehicle to be measured usually includes four tires, in order to further improve the measurement accuracy of the four-wheel alignment parameters of the vehicle to be measured, the four-wheel alignment system may include four calibration units and two measuring units, and both measuring units include two first cameras, calibration members and second cameras. For example, as shown in FIG. 4, FIG. 4 is a structural schematic diagram of a four-wheel alignment system provided by another embodiment of the present application. As shown in FIG. 4, the four-wheel alignment system 1 includes four calibration units 20 and two measuring units 30.

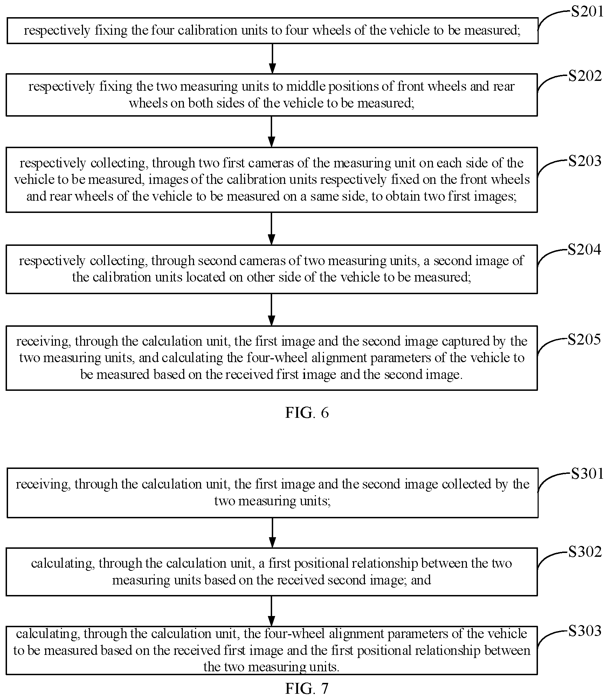

Based on this, as shown in FIG. 6, which is an implementation flow chart of the four-wheel alignment method provided by another embodiment of the present application. As shown in FIG. 6, the four-wheel alignment method provided in the embodiment, the step S101 may specifically include steps S201-S202, the step S102 may specifically include a step S203, and after the step S203, a step S204 may also be included. Correspondingly, the step S103 may specifically include a step S205, which is described in detail as follows:
In the step S201, the four calibration units are fixed to the four wheels of the vehicle to be measured respectively.

In the step S202, two measuring units are respectively fixed to the middle positions of the front wheels and rear wheels on both sides of the vehicle to be measured.

In the step S203, the two first cameras of the measuring unit located on each side of the vehicle to be measured respectively capture images of the calibration units respectively fixed on the front wheels and rear wheels of the vehicle to be measured on the same side as the measuring unit, and to obtain two first images.

In the step S204, the second cameras of the two measuring units respectively capture the second images of the calibration members in the measuring unit located on the other side of the vehicle to be measured.

In the step S205, the calculation unit receives the first and second images captured by the two measuring units, and calculates to obtain the four-wheel alignment parameters of the vehicle to be measured based on the received first and second images.

In the embodiment, the four-wheel alignment system can control the loading device to fix the four calibration units to the four wheels of the vehicle to be measured, and fix two measuring units to the middle positions of the front wheels and rear wheels on both sides of the vehicle to be measured. The loading device can be a loading robot. Optionally, the above-mentioned fixing operation can also be performed by a testing personnel, which is not limited here.

It can be understood that one calibration unit is fixed to each tire of the vehicle to be measured, and one measuring unit is fixed to the middle position between the front wheel and the rear wheel on the same side.

In the embodiment, for any side of the vehicle to be measured, the two first cameras in the measuring unit on any side can respectively capture images of the calibration units on the same side as the measuring unit and fixed on the front and rear wheels of the vehicle to be measured, so as to obtain the first images of each calibration unit on any side of the vehicle to be measured.

Based on this, the measuring unit on each side of the vehicle to be measured can obtain the first images of the two calibration units on the same side, that is, two first images.

At the same time, the second camera of the measuring unit on one side of the vehicle to be measured can capture the second image of the calibration member in the measuring unit on the other side of the vehicle to be measured. Among them, the calibration member can be a spherical object or a plate-shaped object with a circular shape, which is not limited here.

For example, in combination with FIG. 4, the second camera of the measuring unit on the left side can collect the second image of the calibration member in the measuring unit on the right side; and the second camera of the measuring unit on the right side can collect the second image of the calibration member in the measuring unit on the left side.

Afterwards, the calculation unit can receive the two first images and the second image collected by the two measuring units, and calculate to obtain the four-wheel alignment parameters of the vehicle to be measured based on the two received first images and the second image.

In one embodiment of the present application, in order to improve the measurement accuracy of the four-wheel alignment parameters, the calculation unit can specifically perform the step S205 through steps S301-S303 as shown in FIG. 7, as described in detail as follows:

In the step S301, the first image and the second image collected by the two measuring units are received.

In the step S302, the first positional relationship between the two measuring units is calculated based on the received second image.

In the embodiment, since the second image is an image containing the calibration member in the measuring unit, the calculation unit can determine the first positional relationship between the two measuring units based on the two received second image.

It should be noted that the first positional relationship can be represented by a rotation and translation matrix.

In one embodiment of the present application, the receiving unit can specifically determine the above-mentioned first positional relationship according to the following steps, which are described in detail as follows:
respectively obtaining a second positional relationship between the calibration members and the second cameras in the two measuring units, actual coordinate information of each calibration member, and internal parameters of each second camera; and
calculating the first positional relationship based on a pre-stored second positional relationship, each of the actual coordinate information, each of the internal parameters, and each second image.

It should be noted that the intrinsic parameters of the second camera, also known as the intrinsic parameter matrix or the intrinsic parameter, which are the properties of the second camera itself, the intrinsic parameters can be obtained by calibrating the second camera.

The second positional relationship between the calibration member and the second camera in the two measuring units specifically refers to the positional relationship between the calibration members and the second camera in the same measuring unit. Among them, the second positional relationship can be represented by a rotation and translation matrix.

In some possible embodiments, the calculation unit can specifically obtain the second positional relationship between the calibration members and the second camera in the two measuring units according to the following steps, which are described in detail as follows:
respectively obtaining posture images containing the calibration members at different positions of the respective relative measuring units captured by the second cameras in the two measuring units, and obtaining the three-dimensional coordinates of each calibration member at the different positions; and
determining the second positional relationship between the calibration members and the second cameras in the two measuring units based on each of the posture images and the three-dimensional coordinates corresponding to each of the posture images.

In the embodiment, for any measuring unit, the calculation unit can obtain the posture images containing the calibration members at different positions of another measuring unit captured by the second camera in any measuring unit, and obtain the three-dimensional coordinates of the calibration members in the other measuring unit at different positions.

The three-dimensional coordinates of the calibration member specifically refer to the three-dimensional coordinates of the calibration member in the preset second coordinate system. The preset second coordinate system is a world coordinate system, which can be a world coordinate system with the set position of the calibration member as the origin, or a world coordinate system with other point positions on the measuring unit where the calibration member is located as the origin.

In the embodiment, for each posture image captured by any measuring unit, the calculation unit can determine the two-dimensional coordinates of the calibration member in each posture image in the image coordinate system corresponding to the second camera of the any measuring unit. Afterwards, the calculation unit can obtain the fourth positional relationship between the second camera of any measuring unit and the calibration member of another measuring unit based on the two-dimensional coordinates of the calibration member in the posture image in the image coordinate system corresponding to the second camera of the any measuring unit and the three-dimensional coordinates of the calibration member corresponding to each posture image. The fourth positional relationship can be represented by a rotation and translation matrix.

Afterwards, the calculation unit can determine the second positional relationship between the calibration members and the second camera in the same measuring unit according to the fifth positional relationship between the second cameras in the two measuring units and the fourth positional relationship between the second camera of any one of the measuring units and the calibration members of the other measuring unit.

In the embodiment, after the second positional relationship between the calibration member and the second camera in the two measuring units is obtained, the calculation unit can calculate the first positional relationship based on the second positional relationship, the actual coordinate information of each calibration member obtained, the internal parameters of each second camera and each second image.

In the step S303, the four-wheel alignment parameters of the vehicle to be measured are obtained by calculating based on the received first image and the first positional relationship between the two measuring units.

In the embodiment, the calculation unit can determine the positional relationship between the measuring unit and the calibration unit on the same side based on the first image of the calibration unit on the same side captured by the measuring unit. After that, the calculation unit can obtain the parameter information of the tires on the same side relative to the calibration unit fixed on the tires. After that, the calculation unit can convert the above parameter information based on the positional relationship between the calibration units on the same side, so as to obtain the parameter information of the tires on the same side in the same coordinate system.

At the same time, the calculation unit can convert the parameter information of the tires on the other side received by the measuring unit on the other side based on the first positional relationship between the two measuring units, so as to obtain the parameter information of the tires on the other side in the same coordinate system.

Based on this, the calculation unit can obtain the four-wheel alignment parameters of each tire of the vehicle to be measured.

As can be seen from the above, the four-wheel alignment method provided in the embodiment further improves the measurement accuracy of the four-wheel alignment parameters of each tire of the vehicle to be measured.

In another embodiment of the present application, in order to clarify the positional relationship between the two first cameras and the second camera in the same measuring unit, so as to perform coordinate conversion later and obtain parameter information in the same coordinate system, the four-wheel alignment system can specifically perform the following steps, which are described in detail as follows:
respectively fixing a marker to a capturing range of each of the first camera and the second camera;
respectively obtaining third images of respective corresponding markers obtained by each of the first camera and the second camera and the markers at different positions, and obtaining the three-dimensional coordinates of each of the calibration members; and
determining a third positional relationship between each of the first camera and the second camera based on each of the third images and the three-dimensional coordinates of each of the calibration members.

In the embodiment, the four-wheel alignment system can control the loading device to fix one marker to the capturing range of each of the first camera and the second camera respectively. Among them, the loading device can be a loading robot.

It should be noted that the marker can be a spherical object.

It can be understood that one first camera corresponds to one marker, and the second camera corresponds to one marker.

Both the first cameras and the second camera are in the same measuring unit.

In the embodiment, the calculation unit can obtain the third positional relationship between each first cameras and the second camera in the same measuring unit according to the two-dimensional coordinates of each marker in the image coordinate system of each corresponding camera (such as the first camera and the second camera) and the three-dimensional coordinates of each marker.

In another embodiment of the present application, when both measuring units respectively include a control module, and the two measuring units are respectively connected to the terminal device for communication, the calculation unit can be the control module in the first measuring unit. The first measuring unit is any one of the two measuring units. Based on this, the four-wheel alignment method can also be implemented according to the following steps, which are described in detail as follows:
respectively obtaining, through the control modules of the two measuring units, the first image captured by the respective first camera and the second image captured by the respective second camera;
receiving, through the terminal device, the first image and the second image from the control modules of other measuring units except the first measuring unit;
sending, through the terminal device, the received first image and the second image to the control module of the first measuring unit;
calculating, through the control module of the first measuring unit, to obtain the four-wheel alignment parameters of the vehicle to be measured based on the first image captured by the first camera of the first measuring unit, the second image captured by the second camera, and the first image and the second image received by the other measuring units.

In the embodiment, after the control modules of the other measuring units except the first measuring unit obtain the first image captured by respective first camera and the second image captured by respective second camera, the captured first image and the second image can be sent to the terminal device.

Afterwards, the terminal device can send the received first image and the second image captured by other measuring units to the control module of the first measuring unit.

Based on this, the control module of the first measuring unit can calculate to obtain the four-wheel alignment parameters of the vehicle to be measured based on the first image captured by respective first camera, the second image captured by respective second camera, and the first image and second image received by the above-mentioned other measuring units.

In some possible embodiments, after the four-wheel alignment parameters of the vehicle to be measured is obtained, the control module of the first measuring unit can send the four-wheel alignment parameters to the terminal device. Afterwards, the terminal device can display the four-wheel alignment parameters so that relevant personnel at the terminal device can check the four-wheel alignment parameters of the vehicle to be measured in a timely manner.

In another embodiment of the present application, when both measuring units respectively include a control module, and the control modules of the two measuring units are connected in communication, the calculation units can also be the control modules in the target measuring unit. The target measuring unit is any one of the two measuring units. Based on this, the four-wheel alignment method can also be implemented according to the following steps, which are described in detail as follows:
respectively obtaining, through the control modules of the two measuring units, the first image captured by the respective first camera and the second image captured by the respective second camera;
receiving, through the control module of the target measuring unit, the first image and the second image from the control module of another measuring unit other than the target measuring unit; and
calculating, through the control module of the target measuring unit, the four-wheel alignment parameters of the vehicle to be measured based on the first image captured by the first camera of the target measuring unit, the second image captured by the second camera, and the first image and the second image captured by the other measuring unit.

In the embodiment, after the control module of another measuring unit other than the target measuring unit obtains the first image captured by respective first camera and the second image captured by respective second camera, since the two measuring units are connected in communication, the control module of the other measuring unit can send the captured first image and the second image to the target measuring unit.

Afterwards, the control module of the target measuring unit can calculate to obtain the four-wheel alignment parameters of the vehicle to be measured based on the first image captured by respective first camera, the second image captured by respective second camera, and the first image and second image captured by the above-mentioned other measuring unit.

In another embodiment of the present application, when both measuring units respective include a control module, and the control modules of the two measuring units are respectively connected to the terminal device for communication, the calculation unit can also be a terminal device. Based on this, the four-wheel alignment method can also be implemented according to the following steps, which are described in detail as follows:
respectively obtaining, through the control modules of the two measuring units, the first image captured by the respective first camera and the second image captured by the respective second camera;
respectively receiving, through the terminal device, the first image and the second image from the control modules of the two measuring units; and
calculating, through the terminal device, to obtain the four-wheel alignment parameters of the vehicle to be measured based on the received first image and the second image.

In the embodiment, for any measuring unit, the control module of the measuring unit can send the first image and the second image captured to the terminal device after obtaining the first image captured by respective first camera and the second image captured by respective second camera.

Based on this, the terminal device can obtain the first image and the second image sent by the two measuring units respectively.

Afterwards, the terminal device can calculate to obtian the four-wheel alignment parameters of the vehicle to be measured based on the first image and the second image of each of the two measuring units obtained.

In some possible embodiments, the terminal device can also display the four-wheel alignment parameters so that relevant personnel at the terminal device can check the four-wheel alignment parameters of the vehicle to be measured in a timely manner.

It should be understood that the size of the sequence number of each step in the above embodiment does not mean the order of execution. The execution order of each process should be determined by its function and internal logic, and should not constitute any limitation on the implementation process of the embodiment of the present application.

In the above embodiment, the description of each embodiment has its own emphasis. For the part that is not detailed or recorded in a certain embodiment, refer to the relevant description of other embodiments.

## Claims

1. A four-wheel alignment method, applied to a four-wheel alignment system (1), the four-wheel alignment system (1) comprises at least two calibration units (20), at least one measuring unit (30), and a calculation unit (10), and the method comprises:
fixing the at least two calibration units (20) to wheels of the vehicle to be measured, and fixing the at least one measuring unit (30) to a same side of the vehicle to be measured where the at least two calibration units (20) are fixed;
respectively collecting, through the at least one measuring unit (30), images of at the least two calibration units (20) to obtain a first image; and
receiving the first image through the calculation unit (10), and calculating to obtain four-wheel alignment parameters of the vehicle to be measured based on the first image.

2. The four-wheel alignment method according to claim 1, wherein four calibration units (20) are provided, two measuring units (30) are provided, and the two measuring units (30) comprise two first cameras (31), a calibration member, and a second camera (32), and the step of fixing the at least two calibration units (20) to the wheels of the vehicle to be measured and the fixing of the at least one measuring unit (30) to the same side of the vehicle to be measured where at least two calibration units (20) are fixed comprises:
respectively fixing the four calibration units (20) to four wheels of the vehicle to be measured; and
respectively fixing the two measuring units (30) to middle positions of front wheels and rear wheels on both sides of the vehicle to be measured;
the step of respectively collecting, through the at least one measuring unit (30), the images of at the least two calibration units (20) to obtain the first image comprises:
respectively collecting, through two first cameras (31) of the measuring unit (30) on each side of the vehicle to be measured, images of the calibration units (20) respectively fixed on the front wheels and rear wheels of the vehicle to be measured on a same side, to obtain two first images;
the four-wheel alignment method further comprises:
respectively collecting, through second camera (32)s of two measuring units (30), a second image of the calibration units (20) located on other side of the vehicle to be measured;
the step of receiving the first image through the calculation unit (10), and calculating to obtain the four-wheel alignment parameters of the vehicle to be measured based on the first image comprises:
receiving, through the calculation unit (10), the first image and the second image captured by the two measuring units (30), and calculating the four-wheel alignment parameters of the vehicle to be measured based on the received first image and the second image.

3. The four-wheel alignment method according to claim 2, wherein the step of receiving, through the calculation unit (10), the first image and the second image captured by the two measuring units (30), and calculating the four-wheel alignment parameters of the vehicle to be measured based on the received first image and the second image comprises:
receiving, through the calculation unit (10), the first image and the second image collected by the two measuring units (30);
calculating, through the calculation unit (10), a first positional relationship between the two measuring units (30) based on the received second image; and
calculating, through the calculation unit (10), the four-wheel alignment parameters of the vehicle to be measured based on the received first image and the first positional relationship between the two measuring units (30).

4. The four-wheel alignment method according to claim 3, wherein the step of calculating, through the calculation unit (10), the first positional relationship between the two measuring units (30) based on the received second image comprises:
respectively obtaining a second positional relationship between the calibration members and the second camera (32)s in the two measuring units (30), actual coordinate information of each calibration member, and internal parameters of each second camera (32); and
calculating the first positional relationship based on a pre-stored second positional relationship, each of the actual coordinate information, each of the internal parameters, and each second image.

5. The four-wheel alignment method as claimed in claim 3, wherein before the step of respectively collecting the images of the calibration units (20) respectively fixed on the front wheels and rear wheels of the vehicle to be measured on the same side, to obtain the two first images, the our-wheel alignment method further comprises:
respectively fixing a marker to a capturing range of each of the first camera and the second camera (32);
respectively obtaining third images of respective corresponding markers obtained by each of the first camera and the second camera (32) and the markers at different positions, and obtaining the three-dimensional coordinates of each of the calibration members; and
determining a third positional relationship between each of the first camera and the second camera (32) based on each of the third images and the three-dimensional coordinates of each of the calibration members.

6. The four-wheel alignment method as claimed in claim 4, wherein the step of respectively obtaining the second positional relationship between the calibration members and the second camera (32)s in the two measuring units (30) comprises:
respectively obtaining posture images containing the calibration members at different positions of the respective relative measuring units (30) captured by the second camera (32)s in the two measuring units (30), and obtaining the three-dimensional coordinates of each calibration member at the different positions; and
determining the second positional relationship between the calibration members and the second camera (32)s in the two measuring units (30) based on each of the posture images and the three-dimensional coordinates corresponding to each of the posture images.

7. The four-wheel alignment method as claimed in claim 2, wherein both of the two measuring units (30) respectively comprise a control module, the two measuring units (30) are respectively connected to a terminal device for communication, the calculation unit (10) is the control module in the first measuring unit (30), and the first measuring unit (30) is any one of the two measuring units (30); and the four-wheel alignment method further comprises:
respectively obtaining, through the control modules of the two measuring units (30), the first image captured by the respective first camera and the second image captured by the respective second camera (32);
receiving, through the terminal device, the first image and the second image from the control modules of other measuring units (30) except the first measuring unit (30);
sending, through the terminal device, the received first image and the second image to the control module of the first measuring unit (30);
calculating, through the control module of the first measuring unit (30), to obtain the four-wheel alignment parameters of the vehicle to be measured based on the first image captured by the
first camera of the first measuring unit (30), the second image captured by the second camera (32), and the first image and the second image received by the other measuring units (30);
the four-wheel alignment method further comprises:
sending, through the control module of the first measuring unit (30), the four-wheel alignment parameters to the terminal device; and
displaying, through the terminal device, the four-wheel alignment parameters.

8. The four-wheel alignment method as claimed in claim 2, wherein both of the two measuring units (30) respectively comprise a control module, the two measuring units (30) are respectively connected to a terminal device for communication, the calculation unit (10) is the control module in a target measuring unit (30), and the target measuring unit (30) is any one of the two measuring units (30); the four-wheel alignment method further comprises:
respectively obtaining, through the control modules of the two measuring units (30), the first image captured by the respective first camera and the second image captured by the respective second camera (32);
receiving, through the control module of the target measuring unit (30), the first image and the second image from the control module of another measuring unit (30) other than the target measuring unit (30); and
calculating, through the control module of the target measuring unit (30), the four-wheel alignment parameters of the vehicle to be measured based on the first image captured by the first camera of the target measuring unit (30), the second image captured by the second camera (32), and the first image and the second image captured by the other measuring unit (30).

9. The four-wheel alignment method as claimed in claim 2, wherein both of the two measuring units (30) respectively comprise a control module, the control modules of the two measuring units (30) are respectively connected to the terminal device for communication, and the calculation unit (10) is the terminal device; the four-wheel alignment method further comprises:
respectively obtaining, through the control modules of the two measuring units (30), the first image captured by the respective first camera and the second image captured by the respective second camera (32);
respectively receiving, through the terminal device, the first image and the second image from the control modules of the two measuring units (30);
calculating, through the terminal device, to obtain the four-wheel alignment parameters of the vehicle to be measured based on the received first image and the second image;
the four-wheel alignment method further comprises:
displaying, through the terminal device, the four-wheel alignment parameters.

10. A four-wheel alignment system (1), comprising:
at least two calibration units (20), configured to be fixed on wheels of the vehicle to be measured;
at least one measuring unit (30), comprising two first cameras (31), the two first cameras (31) are respectively configured to collect first images of respective corresponding calibration units (20); and
the calculation unit (10), configured to receive the first image and calculate four-wheel alignment parameters of the vehicle to be measured based on the first image.
